(19) **Europäisches Patentamt**
**European Patent Office**
**Office européen des brevets**

(11) **EP 2 362 710 A1**

(12) **EUROPÄISCHE PATENTANMELDUNG**

(43) Veröffentlichungstag:
**31.08.2011 Patentblatt 2011/35**

(51) Int Cl.:
***H05B 7/148*** (2006.01)

(21) Anmeldenummer: **10001823.3**

(22) Anmeldetag: **23.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Siemens Aktiengesellschaft**
**80333 München (DE)**

(72) Erfinder:
• **Dittmer, Björn**
  **21357 Bradowick (DE)**
• **Döbbeler, Arno**
  **91074 Herzogenaurach (DE)**
• **Krüger, Klaus**
  **22179 Hamburg (DE)**
• **Leadbetter, Sascha**
  **80801 München (DE)**
• **Matschullat, Thomas**
  **90542 Eckental (DE)**
• **Rieger, Detlef**
  **85598 Baldham (DE)**

(54) **Verfahren zum Betrieb eines Lichtbogenofens, Steuer- und/oder Regeleinrichtung für einen Lichtbogenofen und Lichtbogenofen**

(57) Die Erfindung betrifft einen Lichtbogenofen, eine Steuer-und/oder Regeleinrichtung für einen Lichtbogenofen und ein Verfahren zum Betrieb eines Lichtbogenofens, wobei mit wenigstens einer Elektrode ein Lichtbogen zum Schmelzen von Metall erzeugt wird, wobei ein der wenigstens einen Elektrode zugeordneter Lichtbogen eine ersten Strahlungsleistung auf Grundlage eines ersten eingestellten Betriebsparametersatzes aufweist, wobei der Lichtbogenofen gemäß einem vorgegebenen Fahrprogramm, das auf einem erwarteten Prozessverlauf beruht, betrieben wird, wobei überwacht wird, ob zwischen tatsächlichem Prozessverlauf und dem erwarteten Prozessverlauf eine unerwünschte Abweichung vorliegt. Indem bei Vorliegen einer Abweichung eine geänderte zweite Strahlungsleistung vorgegeben wird, und anhand der geänderten zweiten Strahlungsleistung ein geänderter zweiter Betriebsparametersatz, insbesondere wenigstens ein Impedanzwert, ermittelt wird, kann ein Verfahren bereitgestellt werden, welches es erlaubt, eine möglichst geringe Einschmelzdauer bei Schonung der Betriebsmittel, insbesondere der Lichtbogenofenkühlung, zu erzielen.

Skizze des Verfahrens zur iterativen Berechnung der optimierten Sollwerte

Abb. 1

EP 2 362 710 A1

**Beschreibung**

Die Erfindung betrifft ein Verfahren zum Betrieb eines Lichtbogenofens, wobei mit wenigstens einer Elektrode ein Lichtbogen zum Schmelzen von Metall erzeugt wird, wobei ein der wenigstens einen Elektrode zugeordneter Lichtbogen eine ersten Strahlungsleistung auf Grundlage eines ersten eingestellten Betriebsparametersatzes aufweist, wobei der Lichtbogenofen gemäß einem vorgegebenen Fahrprogramm, das auf einem erwarteten Prozessverlauf beruht, betrieben wird, wobei überwacht wird, ob zwischen tatsächlichem Prozessverlauf und dem erwarteten Prozessverlauf eine unerwünschte Abweichung vorliegt. Ferner betrifft die Erfindung eine zugehörige Steuer-und/oder Regeleinrichtung für einen Lichtbogenofen, sowie einen Lichtbogenofen.

Bei der Herstellung von Stahl in einem Elektrolichtbogenofen wird Schrott in der Regel mit einem fest hinterlegten Fahrprogramm geschmolzen, in dem die Sollwerte der Elektrodenregelung (beispielsweise in Form von Strom- oder Impedanzsollwerten) vorgegeben werden. Diese Sollwerte sollen eine hohe Produktivität und Wirtschaftlichkeit des Prozesses gewährleisten und basieren zumeist auf Erfahrungswerten. Aufgrund von variierenden Eigenschaften des einzuschmelzenden Schrotts sollte idealerweise eine Anpassung des Fahrdiagramms an den realen Prozessverlauf erfolgen. So kann das Schrotthaufwerk sowohl lokal als auch als Ganzes eine abweichende Schüttdichte haben, was sich auf die Geschwindigkeit des Schmelzfortschrittes auswirkt.

Zur Vermeidung übermäßiger Energieverluste sollte der elektrische Arbeitspunkt in jedem Fall dem realen Schmelzfortschritt angepasst werden. Dies kann je nach Ausführungsart der Regelung eines Elektrolichtbogenofens grundsätzlich verschiedenartig erfolgen. In den meisten Fällen sind die zugehörigen Parameter die Reaktanz einer in Stufen schaltbaren Drosselspule, die sekundäre Außenleiterspannung/-spannungen eines gestuft schaltbaren Ofentransformators und der Lichtbogenstrom bzw. Impedanz über die Sollwerte für die Elektrodenregelung.

Über diese Stellgrößen kann der Schmelzprozess gesteuert werden. Diese Größen werden in der Regel über ein Fahrdiagramm bzw. -programm in Abhängigkeit von der eingebrachten Energie vorgegeben.

Weicht der Prozessverlauf von dem erwarteten Verlauf, der im Fahrdiagramm hinterlegt ist ab, so sollte über die oben genannten Stellgrößen in den automatisierten Ablauf eingegriffen werden.

Für den Fall einer symmetrischen Abweichung, also eine den gesamten Ofen betreffenden Abweichung, kann dies unter Beachtung Nennbelastung der Betriebsmittel, z.B. durch gleichmäßiges bzw. symmetrisches Verändern der Impedanz-Sollwerte, geschehen. Sind jedoch nur einige Bereiche des Ofens von einer Abweichung des erwarteten Schmelzprozesses betroffen so muss differenzierter gehandelt werden.

Wird das Schrotthaufwerk in einem Bereich des Ofens schneller eingeschmolzen, so sollte daraufhin gezielt gehandelt werden, um diesem asymmetrischen Prozessverlauf gerecht zu werden. Ein solcher Unterschied im Schmelzverhalten unterschiedlicher Bereiche des Ofengefäßes kann z.B. durch lokale Inhomogenität im Schrotteinsatz verursacht werden, Folge ist die Ausbildung besonders heißer Bereiche im Ofengefäß (Hot-Spots). Die unterschiedliche Abstrahlung und Abschirmung der Lichtbögen kann z.B. durch die Temperaturverteilung der Panels oder besser und schneller durch Berechnung der Abschirmfaktoren, wie in der Offenlegungsschrift WO 2009095396 A1 beschrieben, gewonnen werden.

Eine Reduzierung der Schmelzleistung des gesamten Lichtbogenofens würde die Prozessdauer unnötig verlängern und somit die Produktivität senken. Es ist vorteilhaft, die Schmelzleistung nicht zu reduzieren, sondern im Gefäß so umzuverteilen, dass die Bereiche mit viel nicht geschmolzenem Schrott mit höherer Strahlungsleistung beaufschlagt werden.

Eine verminderte Anschirmung von einzelnen Lichtbögen, die zur unerwünschten Aufheizung von gegenüberliegenden Panels durch die Strahlung führt, sollte dagegen zur Absenkung der Strahlungsleistung führen. Je nach Ausführung des Ofens kann eine solche asymmetrische Verteilung der Strahlungsleistung auf verschiedene Art und Weise durchgeführt werden.

Eine Abweichung von der durch das Fahrprogramm fest vorgegebenen Prozessführung wird auf zwei Arten durchgeführt. Zum einen kann das Bedienpersonal aufgrund persönlicher Erfahrung bzw. aufgrund von Warnmeldungen in den Prozessablauf manuell eingreifen. Zum anderen kann durch eine Rückmeldung vom Prozess, zumeist ausgeführt in Form einer Auswertung des thermischen Zustands der Panels des Ofengefäßes, eine Anpassung an den momentanen Prozessverlauf erfolgen. Auf diese Art und Weise kann der elektrische Arbeitspunkt in Form von elektrischen Sollwertvorgaben automatisiert geregelt werden. Üblicherweise erfolgt solch eine Leistungsanpassung symmetrisch in allen drei Phasen.

Im Falle der zuletzt genannten automatisierten Regelung wird anhand des thermischen Zustands berechnet, wie die Schmelzleistung der Lichtbögen zu verändern sei. Verschiedene Untersuchungen haben gezeigt, dass die Schmelzleistung der Lichtbögen wesentlich durch Konvektion und thermische Strahlung charakterisiert ist. Im hier betrachteten Fall der Schmelzleistung unmittelbar an den Wandelementen bzw. dem davor liegenden Schrott, ist besonders die von den Lichtbögen abgegebene Strahlungsleistung von Interesse.

Einige wenige automatisierte Lösungen sehen auch die asymmetrische Einstellung der Sollwertvorgaben vor. Dazu werden nach heuristischen Regeln die Sollwerte der Strangimpedanzen angepasst oder aber auch bei geeignetem Ofentrafo unsymmetrische Ofenspannungen gewählt. Eine unmittelbare Vorgabe der angestrebten Strahlungsverteilung ist bis heute nicht möglich. Ausgehend von den gewählten Impedanzen kann über empirische Modelle anschließend die erzielte Strahlungsverteilung ermittelt werden.

Ferner ist es bekannt, dass die Berechnung der elektrischen Größen, worauf aufbauend dann die Strahlungsleistung abgeschätzt wird, auf der Basis eines linearisierten, vereinfachten Ersatzschaltbildes des Elektrolichtbogenofens durchgeführt wird, vgl z.B. S. Köhle, Ersatzschaltbilder und Modelle des Hochstromsystems von Drehostrom-Lichtbogenöfen, Stahl und Eisen 110, Seiten 51 bis 59. Ein weitergehender Ansatz ist, die so gefundenen Strahlungsleistungen mit einem Kreisdiagramm zu verknüpfen, z.B. bekannt aus Görtler et al., "Energetically optimized Control of an Electric Arc Furnace, IEEE International Conference on Control Applications, Taipeh, Taiwan, Seiten 137 bis 142.

Aufgabe der Erfindung ist es, ein Betriebsverfahren, einen Lichtbogenofen, und eine Steuer- und/oder Regeleinrichtung für einen Lichtbogenofen bereitzustellen, welche es erlauben, eine möglichst geringe Einschmelzdauer bei Schonung der Betriebsmittel, insbesondere der Lichtbogenofenkühlung, zu erzielen.

Diese Aufgabe wird jeweils gelöst durch ein Verfahren zum Betrieb eines Lichtbogenofens, wobei mit wenigstens einer Elektrode ein Lichtbogen zum Schmelzen von Metall erzeugt wird, wobei ein der wenigstens einen Elektrode zugeordneter Lichtbogen eine ersten Strahlungsleistung auf Grundlage eines ersten eingestellten Betriebsparametersatzes aufweist, wobei der Lichtbogenofen gemäß einem vorgegebenen Fahrprogramm betrieben wird, wobei überwacht wird, ob das vorgegebene Fahrprogramm eingehalten wird, wobei bei Abweichen des Betriebs von dem vorgegebenen Fahrprogramm eine geänderte zweite Strahlungsleistung vorgegeben wird, und anhand der geänderten zweiten Strahlungsleistung ein geänderter zweiter Betriebsparametersatz, insbesondere wenigstens ein Impedanzwert, ermittelt wird. Insbesondere führt die Einstellung des ermittelten zweiten Betriebsparametersatz zum Erreichen der vorgegebenen geänderten zweiten Strahlungsleistung.

Insbesondere ist es nicht mehr erforderlich die den Lichtbogen beeinflussenden Betriebsparameter, insbesondere Impedanzwerte, iterativ am Lichtbogen einem Optimum anzunähern, bis eine gewünschte Strahlungsleistung für die wenigstens eine Elektrode vorliegt.

Vielmehr kann unmittelbar und exakt ein gewünschter Satz an Betriebsparameter, insbesondere Impedanzwerten, eingestellt werden, welcher die gewünschte Strahlungsleistung für die wenigstens eine Elektrode, vorzugsweise drei Elektroden, auch genau liefert.

Weitere Vorteile ergeben sich aus den Unteransprüchen.

Insbesondere erlaubt es die iterative Lösung des Modells Iterationen bei der Einstellung der Impedanz zu vermeiden. Nach Auffinden des Impedanzwertsatzes für eine vorgegebene Strahlungsleistung kann dieser direkt eingestellt werden. Iterative Anpassungen der eingestellten Impedanzwerte entfallen, wodurch die Betriebsdynamik des Lichtbogenofens verbessert wird und die Zeitdauer bis ein möglichst optimaler Betriebszustand erreicht wird, verringert wird.

Ferner wird die Aufgabe gelöst durch den Gegenstand der Ansprüche 13 und 14.

Nachfolgend wird eine Ausführungsform der Erfindung schematisch erläutert. Hierzu werden folgende Abbildungen herangezogen.

Abbildung 1    zeigt ein schematisches zur Durchführung einer Ausführungsform des erfindungsgemäßen Verfahrens,

Abbildung 2    zeigt ein beispielhaftes vollständiges, lineares Ersatzschaltbild für einen Lichtbogenofen,

Abbildung 3    zeigt Gleichungen zur Berechnung der Lichtbogenströme für ein rechtsdrehendes Drehstromsystem,

Abbildung 4    zeigt einen Impedanzraum mit einer Fläche, wobei Elemente der Fläche stets eine dieselbe konstante Strahlungsleistung für einen bestimmten Strang liefern,

Abbildung 5    zeigt zwei Isoflächen der Strahlungsleistung im Impedanzraum für zwei unterschiedliche Stränge,

Aufgrund der Nachteile des Stands der Technik bedarf es einer Methode, die Schmelzleistung und insbesondere die Strahlungsleistung der Lichtbögen im Elektrolichtbogenofen abzuschätzen bzw. zu berechnen.

Hierzu wird ein Modell verwendet, das es ermöglicht, diese Leistung auf definierte Art und Weise im Ofengefäß zu verteilen. Die Stellgrößen mit denen dies erreicht werden kann, sind prinzipiell die Sollwerte der Strangimpedanzen bzw. hiermit korrespondierende elektrische Größen. Für diesen Fall muss also eine Methode gefunden werden, wie die Strahlungsleistung der Lichtbögen gezielt und definiert durch diese Stellgrößen verändert werden kann.

Zur Berechnung der Strahlungsleistung des Lichtbogens im Elektrolichtbogenofen können verschiedene Modelle verwendet werden.

Vorteilhaft ist es, ein Modell zu verwenden, das aus empirischen Messungen und physikalischen Überlegungen gewonnen wurde. Ein solches ist beispielsweise in Dittmer et al., Modelltheoretische Untersuchungen zur thermischen Strahlungsbelastung in Lichtbogenöfen, elektrowärme international 67 (2009) Nr. 4, Seiten 195 bis 199, in Gleichung 12 oder in erweiterter Version in Gleichung 14, veröffentlicht. Entsprechend des Modells kann die Strahlungsleistung unter Kenntnis des Lichtbogenstroms und der Lichtbogenresistanz bzw. der Lichtbogenspannung berechnet werden.

$$\Phi \sim \frac{U_B}{\sqrt[8]{I}} = I^{0.875} R_B \,. \qquad (1)$$

(UB Lichtbogenspannung, I Strom, RB Lichtbogenresistanz) Korrektur um Spannungsabfall und Badeindrückung:

$$\Phi \sim \frac{(U_B - 80\,\mathrm{V})}{\sqrt[8]{I}} \,. \qquad (1a)$$

Die Berechnung der auftretenden Ströme in Abhängigkeit der elektrischen Sollwertvorgaben wird auf Basis eines vollständigen, linearisierten Ersatzschaltbildes des Lichtbogenofens durchgeführt. Dieses berücksichtigt auch die primärseitigen Elemente, wie z.B. eine Drossel, eine Blindleistungskompensationsanlage und, falls nötig, die Impedanz der primärseitigen Spannungsversorgung. Auf Basis des Ersatzschaltbildes kann nun bei gegebener Transformator- und Drosselstufe für jede Kombination von Impedanz-Sollwerten der Regelung des Lichtbogenofens die für diesen Arbeitspunkt auftretenden Lichtbogenströme und Lichtbogenresistanzen bzw. Spannungen für jeden Lichtbogen und damit unter Verwendung des Strahlungsleistungsmodells (Gleichung 1 bzw. la) die korrekten Strahlungsleistungen der Lichtbögen berechnet werden. Die Methode zur Berechnung der Lichtbogenströme und Spannungen ist hier skizziert:

Als erstes gilt es die Aufspaltung der Impedanz-Sollwerte $Z_{\mathrm{s}i}$ für jeden Strang i um die Resistanz des jeweiligen Lichtbogens $R_{\mathrm{B}i}$ zu berechnen. Dazu muss der allgemeine Zusammenhang zwischen $R_{\mathrm{B}i}$ und der Reaktanz des Lichtbogens $X_{\mathrm{B}i}$ bekannt sein. Beispielhaft kann der Ansatz

$$X_{\mathrm{B}i} = a R_{\mathrm{B}i} + b R_{\mathrm{B}i}^2$$

mit den ofenspezifischen konstanten Faktoren $a$ und $b$ herangezogen werden. Damit kann die zu einem Impedanz-Sollwerte $Z_{\mathrm{s}i}$ gehörende Lichtbogenresistanz $R_{\mathrm{B}i}$ berechnet werden unter Berücksichtigung der sekundärseitigen Reaktanz $X_{\mathrm{L}i}$ und Resistanz $R_{\mathrm{L}i}$ der Zuleitungsverluste. Im Falle des obigen Ansatzes muss dazu ein Polynom vierten Grades nach $R_{\mathrm{B}i}$ aufgelöst werden.

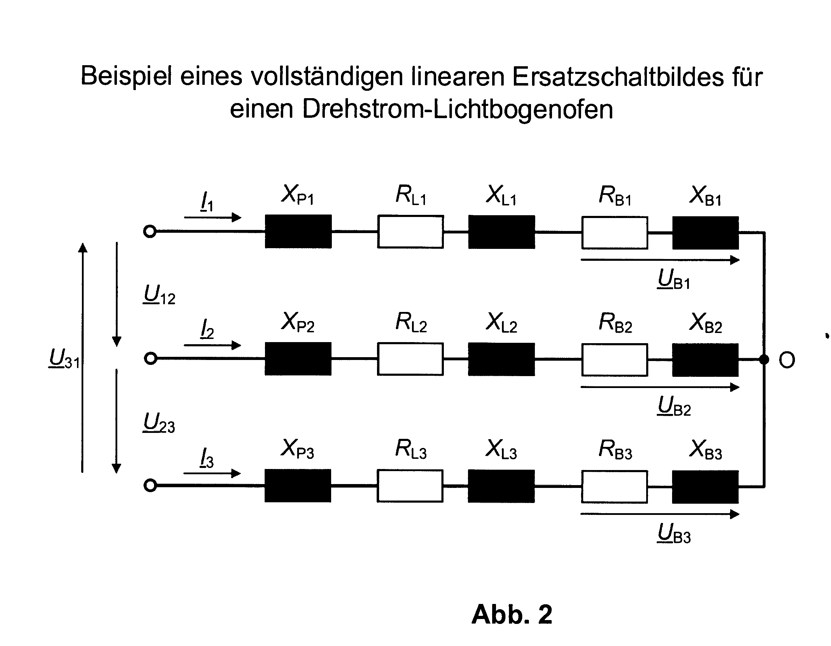

Somit sind alle sekundärseitigen elektrischen Größen bekannt die zur Berechnung der sich einstellenden Ströme benötigt werden. Unter Kenntnis der primärseitigen Reaktanzen $X_{\mathrm{p}i}$ und Resistanzen $R_{\mathrm{P}i}$ kann das vollständige lineare Ersatzschaltbild für den jeweiligen Drehstrom-Lichtbogenofen aufgestellt werden, beispielhaft in Abbildung 2 gezeigt.

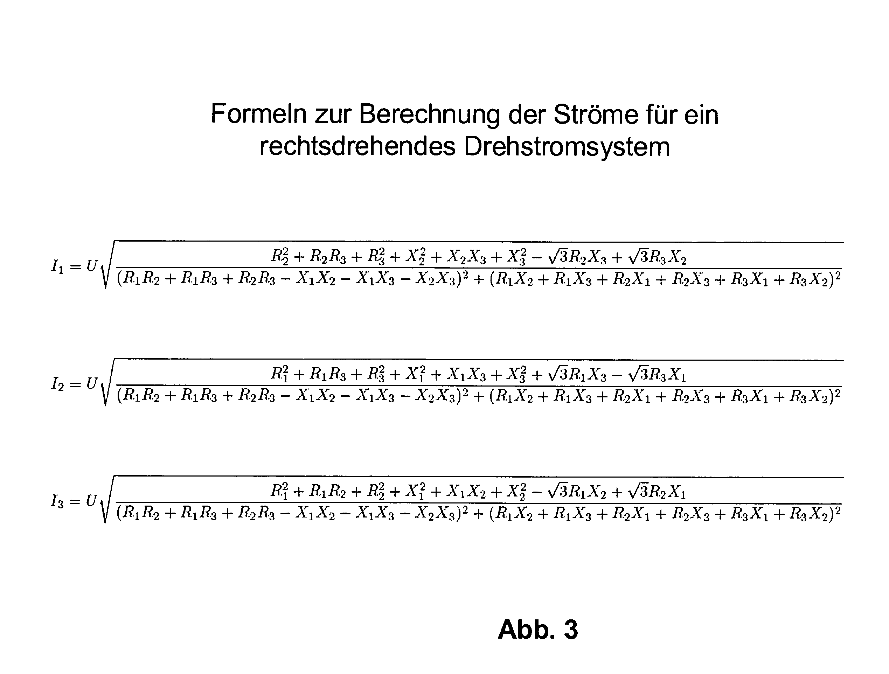

Dadurch können für bekannte Außenleiterspannungen, z.B. $U_{12}$ zwischen Strang 1 und 2, die Ströme $I_i$ berechnet werden. Unter Kenntnis der Phasenfolge des Drehstromsystems können die Ströme wie nach Abbildung 3 für ein rechtsdrehendes System gezeigt, berechnet werden. Zur übersichtlichen Darstellung werden dazu die Reaktanzen eines Strangs zu $X_i$ und die Resistanzen zu $R_i$ zusammengefasst.

Bei Kenntnis der Ströme kann weiterhin die wirksame Spannung über einem Lichtbogen $U_{\mathrm{B}i}$ berechnet werden.

$$U_{\mathrm{B}i} = R_{\mathrm{B}i} I_i \,.$$

Das Ersatzschaltbild ist auch für den asymmetrischen Betrieb uneingeschränkt geeignet die elektrischen Größen korrekt zu berechnen.

Bevorzugt wird die Erfindung derart verwendet, die Strahlungsleistung der Lichtbögen so einzustellen, dass die Strahlungsverluste durch verminderte Abschirmung der einzelnen Lichtbögen und die dadurch bedingte übermäßige Aufheizung der Kühl-Panels (Hot-Spots) vermieden werden.

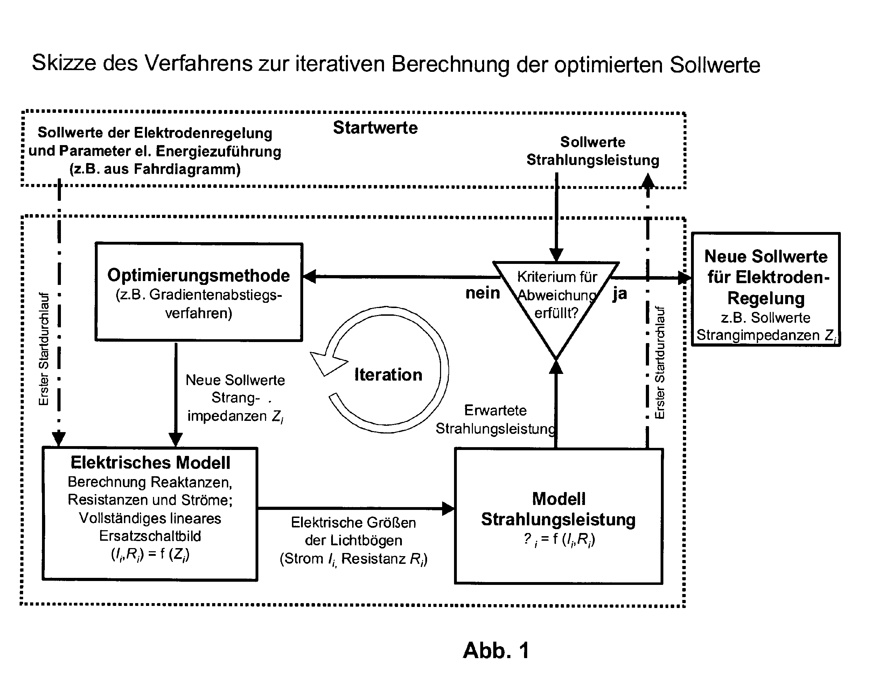

Dazu wurde eine Berechnungsmethode bereitgestellt, an welche die einzustellenden Strahlungsleistungs-Sollwerte der drei Lichtbögen übergeben werden. Dies ist in Abbildung 1 skizziert und wird im Folgenden erläutert.

Hierzu wird die absolute Strahlungsleistung auf die jeweils für den Strang im Fahrdiagramm festgelegte Größe bezogen. Für die Berechnung der Referenzwerte $\Phi^{\mathrm{FD}}$ bezogen auf Fahrdiagramm: $\Phi_1^{\mathrm{FD}}$, $\Phi_2^{\mathrm{FD}}$, $\Phi_3^{\mathrm{FD}}$, muss die Methode entsprechend der äu-βeren, gestrichelten Pfeile in Abbildung 1 einmal durchlaufen werden. Eine Veränderung der Strahlungsleistung der Lichtbögen wird relativ zu diesem Referenzwert vorgenommen. Die Veränderung wird aus der Regelung entsprechend der berechneten Abschirmfaktoren bestimmt (Regelvorschrift siehe Patentanmeldung oben). Prinzipiell gilt: Hohe Abschirmung: Strahlungsleistung kann erhöht werden, niedrige Abschirmung: Strahlungsleistung muss reduziert werden.

Die Sollwertvorgaben für die Strahlungsleistung ergeben sich aus

$$\Phi_i^{\mathrm{Soll}} = \Phi_i^{\mathrm{FD}} \cdot k_i$$

mit Korrekturfaktoren ki aus dem Regelungskonzept für die Abschirmung (siehe oben erwähnte Patentanmeldung).

Da die Strahlungsleistung eine Funktion der Lichtbogenspannung und Stromes ist und der Algorithmus für das elektrisches Ersatzschaltbild nicht invertiert werden kann, sind diese elektrischen Sollwertvorgaben mit einem iterativen Verfahren zu ermitteln, wie in Abbildung 1 skizziert.

Es müssen die Impedanz-Sollwerte oder mit den Impedanzen korrespondierende Parameter gefunden werden, für die sich die quantitativ vorgegebene Strahlungsleistung der Lichtbögen einstellt. In Abbildung 1 ist der iterative mathematische Weg skizziert. Neue, variierte Sollwertvorgaben werden mit einem Standard-Optimierungsverfahren (z.B. Gradientenabstiegsverfahren) erzeugt. Damit werden die zugehörigen Lichtbogenströme und Spannungen berechnet und im Strahlungsmodul die zugehörigen Strahlungsleistungen $\Phi_i^{\mathrm{Berechnet}}$ ermittelt. Das Kriterium für die maximal erlaubte Abweichung zwischen berechneter Strahlungsleistung $\Phi_i^{\mathrm{Berechnet}}$ und dem Sollwert der Strahlungsleistung $\Phi_i^{\mathrm{Soll}}$ kann, z.B. durch die Summe der Fehlerquadrate, festgelegt werden. Übersteigt die Summe der Fehlerquadrate

$$E = \sum_{i=1}^{3} (\Phi_i^{\mathrm{Berechnet}} - \Phi_i^{\mathrm{Soll}})^2 \qquad \text{einen} \qquad \text{zuvor}$$

festgelegten Grenzwert, so wird die Sollwertvorgabe, z.B. der Impedanzen $Z_i$, über das Standard-Optimierungsverfahren solange iterativ angepasst, bis die Bedingung erfüllt ist. In diesem Fall werden die neu gefundenen Sollwerte, z.B. die Impedanzen $(Z_1, Z_2, Z_3)$, an die Elektrodenregelung ausgegeben. Ob eine gültige Lösung zu dieser Aufgabe gefunden werden kann, ist dabei von den Vorgaben im Einzelfall abhängig. Dies wird unten erläutert.

Für eine Elektrodenregelung basierend auf den Strangimpedanzen eines Drehstrom-Lichtbogenofens wird nun gezeigt wie die Erfindung beispielhaft, insbesondere in graphischer Weise, ausgeführt werden kann.

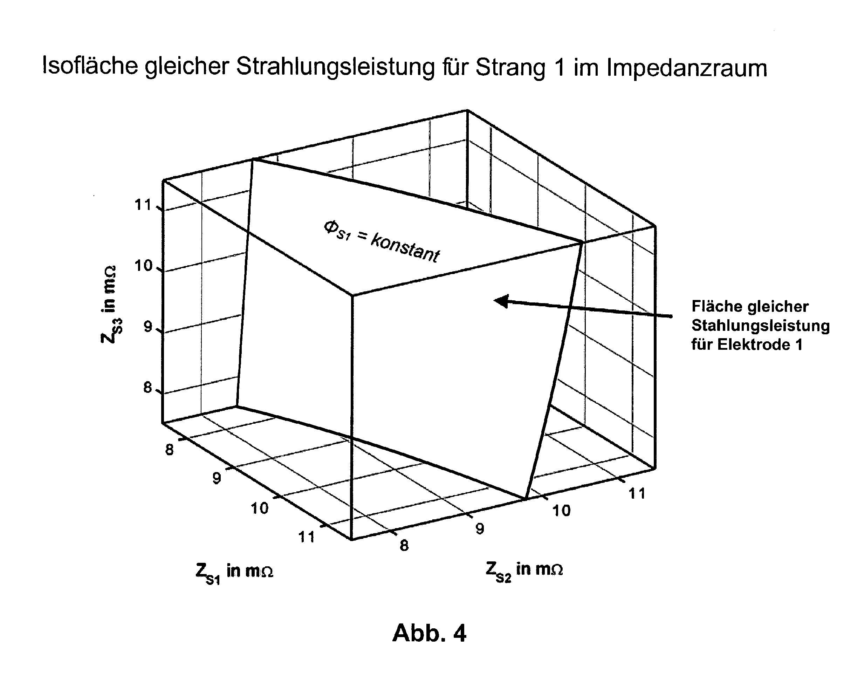

Bei gegebener Transformator- und Drosselstufe wird durch die Impedanz-Sollwerte als verbleibende Stellgrößen der Regelung ein dreidimensionaler Raum aufgespannt. Jede Achse dieses Raums wird durch den Impedanz-Sollwert eines Strangs aufgespannt. Für jeden Punkt in diesem Raum kann nun eine quantitativ bestimmte Strahlungsleistung für jeden Lichtbogen berechnet werden. Wird für einen Lichtbogen nun eine quantitative Strahlungsleistung vorgegeben, so können alle Punkte im dreidimensionalen Impedanzraum, die dieser Strahlungsleistung entsprechen, als Isofläche gleicher Strahlungsleistung dargestellt werden, siehe Abbildung 4. Dabei bezeichnet $Z_{Si}$ den Impedanz-Sollwert für Strang i und $\Phi_{Si}$ die Strahlungsleistung dieses Strangs. Jeder Punkt auf der dargestellten Isofläche repräsentiert eine Kombination aus Impedanz-Sollwerten, die zu der gleichen Strahlungsleistung des Lichtbogens im betrachteten Strang (hier Strang 1) führt.

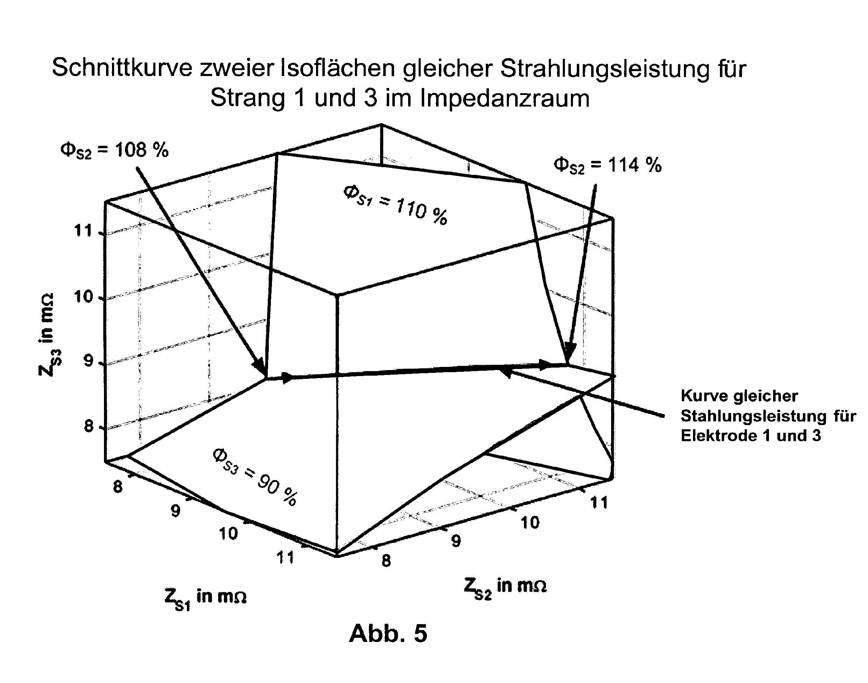

Nun wird für jeden einzelnen Strang eine quantitative, relative Strahlungsleistung vorgegeben. Die Schnittmenge der entsprechenden Isoflächen entspricht der zugehörigen, gesuchten Kombination an Impedanz-Sollwerten. Beispielhaft ist in Abbildung 5 der dreidimensionale Impedanzraum gezeigt, in dem die Isoflächen der Strahlungsleistungen von Strang 1 (z.B. $\Phi_{S1}$, = 110 %) und Strang 3 (z.B. $\Phi_{S3}$ = 90 %) vorgegeben sind. Die Schnittkurve dieser Isoflächen entspricht exakt den Kombinationen von Impedanz-Sollwerten, für welche die vorgegebenen quantitativen Strahlungsleistungen erreicht werden. Der Wertebereich der relativen Strahlungsleistung von Strang 2 auf der Schnittkurve der Isoflächen liegt zwischen 108 % und 114 % Prozent der ursprünglichen Strahlungsleistung. Durch Berechnung einer dritten Isofläche der Strahlungsleistung für Strang 2, z.B. mit $\Phi_{S2}$ = 110 %, erhalt man bei praxisrelevanten Konfigurationen exakt einen Schnittpunkt. Im Falle realisierbarer Vorgaben der Strahlungsleistung liegt der Schnittpunkt der Ebenen $(Z_1, Z_2, Z_3)$ im zulässigen Arbeitsbereich des Lichtbogenofens. Die zugehörigen Strahlungsleistungen stimmen exakt mit den vorgegebenen Strahlungsleistungen der drei Stränge überein.

Es ist zu beachten, dass die Schnittmenge der Isoflächen (= Impedanzpunkt $(Z_1, Z_2, Z_3)$) nicht zwingend in dem zulässigen Bereich der Impedanz-Sollwerte liegen muss, der tatsächlich zur Vorgabe für die Regelung geeignet ist. Die untere Grenze ist gegeben durch die Nennströme des Ofentransformators bzw. durch die sekundären Zuleitungsimpedanzen. Die obere Grenze ist dagegen durch eine Begrenzung der Länge der Lichtbögen, der Strahlungsleistung oder der Stabilität der Lichtbögen gegeben. Liegt die Schnittmenge der Isoflächen außerhalb dieser Begrenzungen, so eignen sich die vorgegebenen Strahlungsleistungen nicht für den realen Ofenbetrieb. Es wird dann eine möglichst optimale Lösung $(Z_1, Z_2, Z_3)$ innerhalb des zulässigen Bereiches verwendet, die den geforderten Strahlungsleistungen möglichst nahe kommt und dabei die technischen Limitationen berücksichtigt. Als zugehöriges Gütekriterium kann beispielsweise die Summe der Fehlerquadrate verwendet werden.

Im Gegensatz zu den bekannten Verfahren wird erfindungsgemäß eine quantitative Strahlungsleistung für jeden Lichtbogen vorgegeben, und darauf aufbauend werden die elektrischen Sollwertvorgaben für die Elektrodenregelung korrekt berechnet. Die obige Berechnungsmethode sieht implizit vor, Isoflächen der Strahlungsleistung der Lichtbögen in Abhängigkeit der Stellgrößen zu berechnen und in einem iterativen Optimierungsverfahren die elektrischen Sollwertvorgaben so zu gewinnen, dass eine vorzugebende Verteilung der Strahlungsleistungen der drei Lichtbögen exakt erreicht wird.

Damit kann der Lichtbogenofen mit minimalen Strahlungsverlusten arbeiten, die Energie optimal auf die Lichtbögen verteilen und das Schmelzgut möglichst gleichmäßig und schnell einschmelzen. Dies ergibt einen erheblichen Produktivitätsgewinn unter Schonung von Betriebsmitteln.

**Patentansprüche**

1. Verfahren zum Betrieb eines Lichtbogenofens, wobei mit wenigstens einer Elektrode ein Lichtbogen zum Schmelzen von Metall erzeugt wird, wobei ein der wenigstens einen Elektrode zugeordneter Lichtbogen eine ersten Strahlungsleistung auf Grundlage eines ersten eingestellten Betriebsparametersatzes aufweist, wobei der Lichtbogenofen gemäß einem vorgegebenen Fahrprogramm, das auf einem erwarteten Prozessverlauf beruht, betrieben wird, wobei überwacht wird, ob zwischen tatsächlichem Prozessverlauf und dem erwarteten Prozessverlauf eine unerwünschte Abweichung vorliegt, **dadurch gekennzeichnet, dass** bei Vorliegen einer Abweichung eine geänderte zweite Strahlungsleistung vorgegeben wird, und anhand der geänderten zweiten Strahlungsleistung ein geänderter zweiter Betriebsparametersatz, insbesondere wenigstens ein Impedanzwert, ermittelt wird.

2. Verfahren nach Anspruch 1, **dadurch gekennzeichnet, dass** der zweite Betriebsparametersatz iterativ ermittelt wird.

3. Verfahren nach Anspruch 1 oder 2, **dadurch gekennzeichnet, dass** zur iterativen Ermittlung ein erstes Modell zur Ermittlung einer Strahlungsleistung aus elektrischen Größen verwendet wird.

4. Verfahren nach Anspruch 3, **dadurch gekennzeichnet, dass** zusätzlich ein zweites Modell verwendet wird, mit welchem die Strahlungsleistung mittelbar beeinflussende Größen, insbesondere die Impedanz, in die Strahlungsleistung unmittelbar beeinflussende elektrische Größen, insbesondere Lichtbogenstrom und/oder Resistanz, überführt werden.

5. Verfahren nach Anspruch 4, **dadurch gekennzeichnet, dass** das zweite Modell zur Überführung ein elektrisches Ersatzschaltbild für den Lichtbogenofen verwendet.

6. Verfahren nach einem der Ansprüche 1 bis 5, **dadurch gekennzeichnet, dass** bei der Ermittlung des geänderten zweiten Betriebsparametersatzes die Einhaltung von Nebenbedingungen, insbesondere technischer Limitationen des Lichtbogenofenbetriebs, berücksichtigt wird.

7. Verfahren nach einem der Ansprüche 1 bis 6, **dadurch gekennzeichnet, dass** die geänderte zweite Strahlungsleistung in Abhängigkeit von einer im Lichtbogenofen vorliegenden Abschirmung des Lichtbogens festgelegt wird.

8. Verfahren nach einem der Ansprüche 1 bis 6, **dadurch gekennzeichnet, dass** die geänderte zweite Strahlungsleistung in Abhängigkeit von einer im Lichtbogenofen vorliegenden Schrottverteilung und/oder Stükkigkeit festgelegt wird.

9. Verfahren nach einem der Ansprüche 1 bis 8, **dadurch gekennzeichnet, dass** der Lichtbogenofen drei Elektroden aufweist, welchen jeweils ein Lichtbogen zugeordnet ist, wobei bei Vorliegen einer Abweichung für wenigstens zwei, vorzugsweise jeden, der drei Lichtbögen jeweils eine geänderte zweite Strahlungsleistung festgelegt wird, anhand derer ein zweiter Betriebsparametersatz für wenigstens zwei, vorzugsweise für jeden, der drei Lichtbögen ermittelt wird.

10. Verfahren nach Anspruch 9, **dadurch gekennzeichnet, dass** die Strahlungsleistung wenigstens zweier Lichtbögen geändert wird, wobei die Summe der einzelnen Strahlungsleistungen der den drei Elektroden zugeordneten Lichtbögen vor und nach Änderung der Strahlungsleistung im Wesentlichen gleich ist.

11. Verfahren nach einem vorhergehenden Ansprüche, **dadurch gekennzeichnet, dass** der Lichtbogenofen drei Elektroden aufweist, welchen jeweils ein Lichtbogen zugeordnet ist, wobei bei Vorliegen einer Abweichung für jeden Lichtbogen jeweils eine geänderte zweite Strahlungsleistung vorgegeben wird, und anhand dieser zweiten Strahlungsleistungen ein gemeinsamer Satz an Betriebsparametern, insbesondere Impedanzwerten, ermittelt wird, so dass jeder Lichtbogen die festgelegte Strahlungsleistung erreicht.

12. Verfahren nach einem vorhergehenden Ansprüche, **dadurch gekennzeichnet, dass** die Strahlungsleistung für die drei Lichtbögen derart festgelegt wird, dass eine thermische Belastung des Lichtbogenofens, insbesondere der Kühlelemente des Lichtbogenofens, verringert, insbesondere minimiert, wird.

13. Steuer und/oder Regeleinrichtung für einen Lichtbogenofen, umfassend einen maschinenlesbaren Programmcode, welcher Steuerbefehle aufweist, welche bei deren Ausführung die Steuer- und/oder Regeleinrichtung zur Durchführung des Verfahrens nach einem der vorhergehende Ansprüche veranlassen.

**14.** Lichtbogenofen zum Schmelzen von Metall, mit wenigstens einer, vorzugsweise drei, Elektrode zur Erzeugung eines Lichtbogens, mit einer Steuer- und/oder Regeleinrichtung nach Anspruch 14, wobei die Steuer- und/oder Regeleinrichtung mit Mitteln zur Einstellung einer Strahlungsleistung und/oder von die Strahlungsleistung beeinflussenden Größen wirkverbunden ist.

# Skizze des Verfahrens zur iterativen Berechnung der optimierten Sollwerte

**Startwerte**

**Sollwerte der Elektrodenregelung und Parameter el. Energiezuführung (z.B. aus Fahrdiagramm)**

**Sollwerte Strahlungsleistung**

Erster Startdurchlauf

**Optimierungsmethode** (z.B. Gradientenabstiegsverfahren)

**nein** — Kriterium für Abweichung erfüllt? — **ja**

**Iteration**

Neue Sollwerte Strang-impedanzen $Z_i$

Erwartete Strahlungsleistung

Erster Startdurchlauf

**Neue Sollwerte für Elektroden-Regelung** z.B. Sollwerte Strangimpedanzen $Z_i$

**Elektrisches Modell** Berechnung Reaktanzen, Resistanzen und Ströme; Vollständiges lineares Ersatzschaltbild $(I_i, R_i) = f(Z_i)$

Elektrische Größen der Lichtbögen (Strom $I_i$, Resistanz $R_i$)

**Modell Strahlungsleistung** $?_i = f(I_i, R_i)$

**Abb. 1**

EP 2 362 710 A1

Beispiel eines vollständigen linearen Ersatzschaltbildes für einen Drehstrom-Lichtbogenofen

**Abb. 2**

## Formeln zur Berechnung der Ströme für ein rechtsdrehendes Drehstromsystem

$$I_1 = U\sqrt{\frac{R_2^2 + R_2R_3 + R_3^2 + X_2^2 + X_2X_3 + X_3^2 - \sqrt{3}R_2X_3 + \sqrt{3}R_3X_2}{(R_1R_2 + R_1R_3 + R_2R_3 - X_1X_2 - X_1X_3 - X_2X_3)^2 + (R_1X_2 + R_1X_3 + R_2X_1 + R_2X_3 + R_3X_1 + R_3X_2)^2}}$$

$$I_2 = U\sqrt{\frac{R_1^2 + R_1R_3 + R_3^2 + X_1^2 + X_1X_3 + X_3^2 + \sqrt{3}R_1X_3 - \sqrt{3}R_3X_1}{(R_1R_2 + R_1R_3 + R_2R_3 - X_1X_2 - X_1X_3 - X_2X_3)^2 + (R_1X_2 + R_1X_3 + R_2X_1 + R_2X_3 + R_3X_1 + R_3X_2)^2}}$$

$$I_3 = U\sqrt{\frac{R_1^2 + R_1R_2 + R_2^2 + X_1^2 + X_1X_2 + X_2^2 - \sqrt{3}R_1X_2 + \sqrt{3}R_2X_1}{(R_1R_2 + R_1R_3 + R_2R_3 - X_1X_2 - X_1X_3 - X_2X_3)^2 + (R_1X_2 + R_1X_3 + R_2X_1 + R_2X_3 + R_3X_1 + R_3X_2)^2}}$$

**Abb. 3**

EP 2 362 710 A1

Isofläche gleicher Strahlungsleistung für Strang 1 im Impedanzraum

Fläche gleicher Stahlungsleistung für Elektrode 1

$\Phi_{S1}$ = konstant

$Z_{S3}$ in mΩ

$Z_{S1}$ in mΩ

$Z_{S2}$ in mΩ

Abb. 4

## Schnittkurve zweier Isoflächen gleicher Strahlungsleistung für Strang 1 und 3 im Impedanzraum

$\Phi_{S2} = 108 \%$

$\Phi_{S2} = 114 \%$

$\Phi_{S1} = 110 \%$

$Z_{S3}$ in m$\Omega$

**Kurve gleicher Stahlungsleistung für Elektrode 1 und 3**

$\Phi_{S3} = 90 \%$

$Z_{S1}$ in m$\Omega$

$Z_{S2}$ in m$\Omega$

## Abb. 5

EP 2 362 710 A1

Europäisches
Patentamt

European
Patent Office

Office européen
des brevets

**EUROPÄISCHER RECHERCHENBERICHT**

Nummer der Anmeldung

EP 10 00 1823

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 197 11 453 A1 (SIEMENS AG [DE]) 24. September 1998 (1998-09-24) * Spalte 3, Zeile 18 - Zeile 62; Anspruch 1 * ----- | 1,14 | INV. H05B7/148 |
| A | WO 2008/034556 A1 (SMS DEMAG AG [DE]; SCHUBERT MANFRED [DE]; KRUEGER KLAUS [DE]; DORNDORF) 27. März 2008 (2008-03-27) * Seite 10, Zeile 13 - Seite 11, Zeile 24 * ----- | 1-14 | |
| A | DE 10 2007 041632 A1 (SMS DEMAG AG [DE]) 3. April 2008 (2008-04-03) * Absatz [0054] - Absatz [0060] * ----- | 1-14 | |
| A | WO 2006/089315 A1 (MINTEK [ZA]; BARKER IAN JAMES [ZA]) 24. August 2006 (2006-08-24) * Absatz [0033] - Absatz [0038]; Abbildungen 1,3 * ----- | 1-14 | |
| A | WO 2007/009924 A1 (SIEMENS AG [DE]; RIEGER DETLEF [DE]; FINK DIETER [DE]; GERHARD DETLEF) 25. Januar 2007 (2007-01-25) * Seite 5 - Seite 7 * ----- | 1-14 | **RECHERCHIERTE SACHGEBIETE (IPC)** H05B |

Der vorliegende Recherchenbericht wurde für alle Patentansprüche erstellt

| Recherchenort | Abschlußdatum der Recherche | Prüfer |
|---|---|---|
| München | 6. Juli 2010 | Gea Haupt, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 00 1823

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-07-2010

| Im Recherchenbericht angeführtes Patentdokument | Datum der Veröffentlichung | Mitglied(er) der Patentfamilie | | Datum der Veröffentlichung |
|---|---|---|---|---|
| DE 19711453 A1 | 24-09-1998 | CN | 1244333 A | 09-02-2000 |
| | | WO | 9842164 A1 | 24-09-1998 |
| | | DE | 19880328 D2 | 30-03-2000 |
| | | US | 6104744 A | 15-08-2000 |
| WO 2008034556 A1 | 27-03-2008 | KEINE | | |
| DE 102007041632 A1 | 03-04-2008 | AT | 449524 T | 15-12-2009 |
| | | CA | 2663761 A1 | 27-03-2008 |
| | | EP | 2067378 A1 | 10-06-2009 |
| | | ES | 2335321 T3 | 24-03-2010 |
| | | JP | 2010503816 T | 04-02-2010 |
| | | KR | 20090031451 A | 25-03-2009 |
| | | US | 2009238234 A1 | 24-09-2009 |
| WO 2006089315 A1 | 24-08-2006 | ZA | 200705345 A | 27-08-2008 |
| WO 2007009924 A1 | 25-01-2007 | AR | 055992 A1 | 12-09-2007 |
| | | CA | 2615929 A1 | 25-01-2007 |
| | | EP | 1910763 A1 | 16-04-2008 |
| | | JP | 2009503419 T | 29-01-2009 |
| | | KR | 20080022585 A | 11-03-2008 |
| | | US | 2008285615 A1 | 20-11-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• WO 2009095396 A1

**In der Beschreibung aufgeführte Nicht-Patentliteratur**

• **S. KÖHLE.** Ersatzschaltbilder und Modelle des Hochstromsystems von Drehostrom-Lichtbogenöfen. *Stahl und Eisen,* vol. 110, 51-59
• **GÖRTLER et al.** Energetically optimized Control of an Electric Arc Furnace. *IEEE International Conference on Control Applications,* 137-142

• **DITTMER et al.** Modelltheoretische Untersuchungen zur thermischen Strahlungsbelastung. *Lichtbogenöfen, elektrowärme international,* 2009, vol. 67 (4), 195-199